# EUROPÄISCHE PATENTSCHRIFT

(11) **EP 1 632 422 B1**
(45) Veröffentlichungstag und Bekanntmachung des Hinweises auf die Patenterteilung: **26.12.2007**
(21) Anmeldenummer: 05019050.3
(22) Anmeldetag: 01.09.2005
(51) Int. Cl.: B62D 25/20, B62D 25/04

(54) **Karosserie für ein Kraftfahrzeug**
Motor vehicle body
Carrosserie de véhicule automobile

(30) Priorität: 03.09.2004 DE 102004042713
(43) Veröffentlichungstag der Anmeldung: 08.03.2006
(73) Patentinhaber: GM Global Technology Operations, Inc., Detroit, MI 48265-3000 (US)
(72) Erfinder: Graffe, Matthias, 55128 Mainz (DE); Maucher, Roland, 63263 Neu-Isenburg (DE); Müller, Reinhard, 55232 Ensheim (DE); Pohl, Thorsten, 55116 Mainz (DE); Uptmoor, Manfred, 67808 Mörsfeld (DE)
(74) Vertreter: Strauss, Peter

(56) Entgegenhaltungen:
- EP-A- 0 856 455
- DE-A1- 10 332 634
- DE-A1- 10 347 556
- DE-A1- 19 648 495
- US-A- 5 820 204
- PATENT ABSTRACTS OF JAPAN Bd. 016, Nr. 573 (M-1344), 14. Dezember 1992 (1992-12-14) & JP 04 221276 A (TOYOTA MOTOR CORP), 11. August 1992 (1992-08-11)

## Beschreibung

Die Erfindung betrifft eine Karosserie für ein Kraftfahrzeug mit einem eine Bodengruppe seitlich begrenzenden Längsträger, mit einem an dem unteren Bereich des Längsträgers befestigten Bodenblech und mit einer, sich an der Bodengruppe abstützenden, eine Türausnehmung nach hinten begrenzenden B-Säule, wobei die B-Säule in den Längsträger eindringt und eine Verbindung des Längsträgers mit der B-Säule an der Unterseite des Längsträgers angeordnet ist und ein an der Außenseite angeordnetes Verstärkungsblech der B-Säule bis auf die Höhe des Bodenblechs geführt ist.

Die JP 04 221 276 A offenbart eine solche Karosserie für ein Kraftfahrzeug, bei dem eine mittlere Säule mit einem Verstärkungselement verbunden ist. Ein Längsträger hat eine Öffnung und nimmt das Verstärkungselement auf.

Die EP 0 844 165 B1 offenbart eine Karosserie, bei der die B-Säule auf einen Schweller des Längsträgers aufgesetzt und über ein schräg sich an dem Bodenblech abstützenden Verstärkungsblech mit der Bodengruppe verbunden ist. Der Schweller stützt bei einem Frontalcrash entstehende Kräfte ab, während das Verstärkungsblech bei einem Seitenaufprall Kräfte von der B-Säule in die Bodengruppe einleitet. Hierdurch wird bei einem Crash die Fahrgastzelle des Kraftfahrzeuges weitgehend intakt gehalten. Nachteilig bei der bekannten Karosserie ist jedoch, dass die Anbindung der B-Säule an die Bodengruppe nur sehr schwer zu fertigen ist. Weiterhin weist die Anbindung der B-Säule an die Bodengruppe sehr große Abmessungen auf, was beispielsweise beim Einsatz von hochfesten Stählen zu hohen Kosten führt.

Der Erfindung liegt das Problem zugrunde, eine Karosserie der eingangs genannten Art so zu gestalten, dass sie eine besonders hohe Stabilität aufweist und möglichst kostengünstig herstellbar ist.

Dieses Problem wird erfindungsgemäß dadurch gelöst, dass das bis auf die Höhe des Bodenblechs geführte Verstärkungsblech der B-Säule mit einer gegenüber anderen Blechen der B-Säule größeren Blechstärke und/oder aus einem Blech mit einer im Vergleich zu anderen Blechen höheren Festigkeit gefertigt ist.

Durch diese Gestaltung weist die Anbindung der B-Säule an die Bodengruppe eine besonders einfache Geometrie auf und ist daher besonders kostengünstig zu fertigen. Weiterhin werden die bei einem Seitenaufprall auftretenden Kräfte von der B-Säule in den die Bodengruppe nach außen hin begrenzenden Längsträger eingeleitet. Hierdurch wird vermieden, dass die B-Säule bei einem Seitenaufprall gegenüber der Bodengruppe und damit gegenüber dem Längsträger wegknickt. Damit weist die erfindungsgemäße Karosserie eine besonders hohe Stabilität auf. Ein weiterer Vorteil der erfindungsgemäßen Karosserie besteht darin, dass Detailabstimmungen zur Abstützung der Kräfte bei einem Crash durch entsprechende Formgebungen oder dergleichen in der B-Säule mit besonders geringem Aufwand vorgenommen werden können und damit die Stabilität der Anbindung der B-Säule für den vorgesehenen Einsatzbereich der Karosserie eingestellt werden kann. Zur Erhöhung der Festigkeit der Anbindung der B-Säule an die Bodengruppe trägt es bei, wenn das bis auf die Höhe des Bodenblechs geführte Verstärkungsblech der B-Säulemit einer gegenüber anderen Blechen der B-Säule größeren Blechstärke und/oder aus einem Blech mit einer im Vergleich zu den anderen Blechen höheren Festigkeit gefertigt ist. Da das Verstärkungsblech nur sehr kleine Abmessungen benötigt, trägt der Einsatz von hochfesten Stählen nur zu einer unwesentlichen Erhöhung der Fertigungskosten der erfindungsgemäßen Karosserie bei. Ein weiterer Vorteil dieser Gestaltung besteht darin, dass die Detailabstimmungen zur Abstützung der Kräfte bei einem Crash einfach an dem Verstärkungsblech der B-Säule vorgenommen werden können. Das Verstärkungsblech, welches eine besonders hohe Stabilität aufweist, leitet dank der Erfindung die beim Crash auftretenden Kräfte von außen in einen besonders tiefen Bereich der Bodengruppe der Karosserie ein. Dies führt zu einer besonders hohen Steifheit der Karosserie, insbesondere beim Seitenaufprall.

Zur weiteren Erhöhung der Festigkeit der Anbindung der B-Säule an die Bodengruppe trägt es gemäß einer anderen vorteilhaften Weiterbildung der Erfindung bei, wenn das bis auf die Höhe des Bodenblechs geführte Verstärkungsblech der B-Säule durch eine Ausnehmung in einen Längsträger eindringt.

Zur weiteren Erhöhung der Festigkeit der Anbindung der B-Säule an die Bodengruppe trägt es gemäß einer anderen vorteilhaften Weiterbildung der Erfindung bei, wenn die B-Säule sich vor dem Längsträger erweitert und mit einer Erweiterung in den Längsträger eindringt. Hierdurch ist die B-Säule flaschenförmig ausgebildet, wobei die Erweiterung vor dem Längsträger angeordnet ist. Die Erweiterung hat eine hohe Stabilität und lässt sich besonders einfach an der Bodengruppe befestigen.

Die B-Säule gestaltet sich konstruktiv besonders einfach, wenn das Verstärkungsblech der B-Säule

Die B-Säule gestaltet sich konstruktiv besonders einfach, wenn das Verstärkungsblech der B-Säule die in den Längsträger eindringende Erweiterung aufweist.

Eine kontinuierliche Erweiterung der B-Säule im Bereich des Längsträgers führt zu einem hohen Gewicht und zu langen Schweißnähten der Karosserie. Eine solche kontinuierliche Erweiterung der B-Säule lässt sich gemäß einer anderen vorteilhaften Weiterbildung der Erfindung einfach vermeiden, wenn die Erweiterung über die gesamte Höhe nahezu denselben Querschnitt aufweist.

Das Verstärkungsblech der B-Säule lässt sich gemäß einer anderen vorteilhaften Weiterbildung der Erfindung mit besonders geringen Abmessungen versehen, wenn das Verstärkungsblech an seinem von der Bodengruppe wegweisenden Ende an übrigen Blechen der B-Säule befestigt ist. Dies trägt zu besonders geringen Fertigungskosten der erfindungsgemäßen Karosserie bei.

Eine gleichmäßige äußere Oberfläche der erfindungsgemäßen Kraftfahrzeugkarosserie lässt sich einfach erzeugen, wenn das Verstärkungsblech der B-Säule von einem Außenblech überdeckt ist.

Zur Verstärkung des an die B-Säule angrenzenden Bereichs eines Einstiegs für die Fahrgastzelle des Kraftfahrzeuges trägt es gemäß einer anderen vorteilhaften Weiterbildung der Erfindung bei, wenn ein parallel zu einem Schweller des Längsträgers geführtes zweites Verstärkungsblech zumindest den nahe der Bodengruppe angeordneten Bereich des Verstärkungsblechs der B-Säule überdeckt.

Die Befestigung des Verstärkungsblechs der B-Säule an der Bodengruppe könnte beispielsweise über das Bodenblech erfolgen. Zur weiteren Erhöhung der Stabilität der Anbindung der B-Säule an die Bodengruppe trägt es jedoch bei, wenn das Verstärkungsblech der B-Säule an dem zweiten Verstärkungsblech befestigt ist. Da das zweite Verstärkungsblech parallel zu dem Schweller geführt ist, weist die Anbindung des zweiten Verstärkungsblechs an die Bodengruppe ohnehin eine sehr hohe Stabilität auf. Weiterhin wird hierdurch die aufwändige Verbindung einer Vielzahl von übereinander liegenden Blechen vermieden.

Zur weiteren Erhöhung der Stabilität der Anbindung der B-Säule an die Bodengruppe trägt es gemäß einer anderen vorteilhaften Weiterbildung der Erfindung bei, wenn ein Bodenquerträger auf die Anbindung der B-Säule an die Bodengruppe zuläuft.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: perspektivisch einen Teilbereich einer erfindungsgemäßen Karosserie im Bereich einer Anbindung der B-Säule an eine Bodengruppe,
- Fig. 2: eine weitere perspektivische Darstellung des Teilbereichs der erfindungsgemäßen Karosserie aus Figur 1,
- Fig. 3: eine Schnittdarstellung durch den Teilbereich der erfindungsgemäßen Karosserie aus Figur 1.

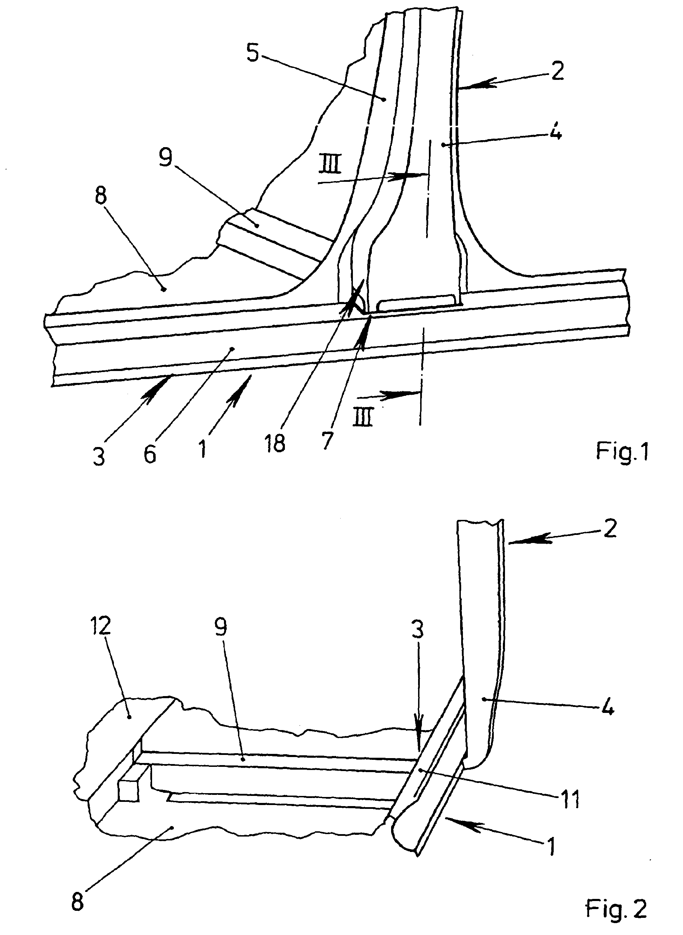

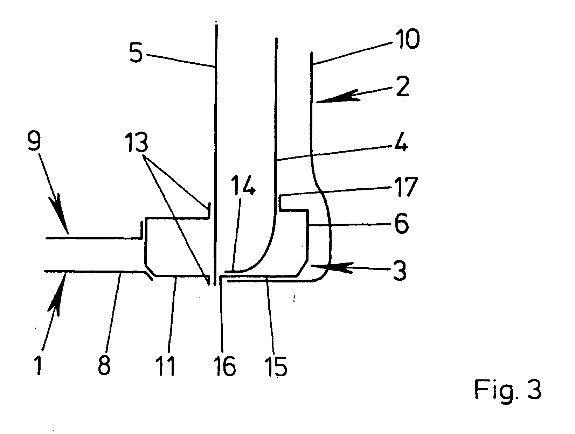

Figur 1 zeigt einen Teilbereich einer Karosserie eines Kraftfahrzeuges einer Bodengruppe 1 einer Fahrgastzelle und eine vertikal zu der Bodengruppe 1 angeordneten B-Säule 2. Die Bodengruppe 1 wird nach außen hin von einem Längsträger 3 begrenzt. Die B-Säule 2 dringt mit einem Verstärkungsblech 4 in den Längsträger 3 ein. Ein Innenblech 5 der B-Säule 2 ist mit dem Verstärkungsblech 4 verschweißt. Der Längsträger 3 weist ein zweites Verstärkungsblech 6 auf, welches eine Türöffnung einer Fahrertür oder einer Beifahrertür nach unten hin begrenzt. Die B-Säule 2 begrenzt die Türöffnung in Fahrtrichtung des Kraftfahrzeuges nach hinten. Das Verstärkungsblech 6 des Längsträgers 4 weist eine Ausnehmung 7 zur Durchführung des Verstärkungsblechs 4 der B-Säule auf. Die Bodengruppe 1 hat einen auf einem Bodenblech 8 befestigten Bodenquerträger 9. Der Bodenquerträger 9 ist quer zur Fahrtrichtung des Kraftfahrzeuges angeordnet und läuft auf die B-Säule 2 zu. Ein die B-Säule 2 und den Längsträger 3 abdeckendes Außenblech 10 ist zur Verdeutlichung der Zeichnung nur in Figur 3 dargestellt.

Figur 2 zeigt stark vergrößert eine weitere perspektivische Darstellung eines Teilbereichs der Karosserie im Bereich der Anbindung der B-Säule 2 an die Bodengruppe 1. Zur Verdeutlichung der Zeichnung sind das zweite Verstärkungsblech 6 des Längsträgers und das Innenblech 5 der B-Säule 2 nicht dargestellt. Der Längsträger 3 weist einen Schweller 11 auf, an dem der Bodenquerträger 9 befestigt ist. Der Bodenquerträger 9 ist bis zu einem die Fahrgastzelle des Kraftfahrzeuges in Fahrtrichtung durchdringenden Mitteltunnel 12 geführt. Das Verstärkungsblech 4 der B-Säule weitet sich vor dem Längsträger 3 auf und dringt mit einer hierdurch erzeugten Erweiterung 18 in den Längsträger 3 ein. Die Erweiterung 18 weist über ihre gesamte Höhe denselben Querschnitt auf.

Figur 3 zeigt den Teilbereich der Karosserie aus Figur 1 in einer Schnittdarstellung entlang der Linie III - III. Hierbei ist zu erkennen, dass der Schweller 11 Flansche 13 aufweist, mit denen er mit dem Innenblech 5 der B-Säule 2 verschweißt ist. Das Verstärkungsblech 4 der B-Säule 2 weist ebenfalls einen Flansch 14 auf, mit denen es mit einem unteren Schenkel 15 des zweiten Verstärkungsblechs 6 des Längsträgers 3 verschweißt ist. Das zweite Verstärkungsblech 6 weist einen ersten Flansch 16 auf, mit dem es mit dem Innenblech 4 der B-Säule 2 und einem der Flansche 13 des Schwellers 11 verschweißt ist und einen zweiten Flansch 17 auf, mit dem es mit dem Verstärkungsblech 4 der B-Säule 2 verschweißt ist.

### Bezugszeichenliste

- 1: Bodengruppe
- 2: B-Säule
- 3: Längsträger
- 4: Verstärkungsblech
- 5: Innenblech

- 6: Verstärkungsblech
- 7: Ausnehmung
- 8: Bodenblech
- 9: Bodenquerträger
- 10: Außenblech

- 11: Schweller
- 12: Mitteltunnel
- 13, 14: Flansch
- 15: Schenkel
- 16, 17: Flansch

- 18: Erweiterung

## Patentansprüche

1. Karosserie für ein Kraftfahrzeug mit einem eine Bodengruppe (1) seitlich begrenzenden Längsträger (3), mit einem an dem unteren Bereich des Längsträgers (3) befestigten Bodenblech (8) und mit einer, sich an der Bodengruppe (1) abstützenden, eine Türausnehmung nach hinten begrenzenden B-Säule (2), wobei die B-Säule (2) in den Längsträger (3) eindringt und eine Verbindung des Längsträges (3) mit der B-Säule (2) an der Unterseite des Längsträgers (3) angeordnet ist und ein an der Außenseite angeordnetes Verstärkungsblech (4) der B-Säule (2) bis auf die Höhe des Bodenblechs (8) geführt ist, **dadurch gekennzeichnet, dass** das bis auf die Höhe des Bodenblechs (8) geführte Verstärkungsblech (4) der B-Säule (2) mit einer gegenüber anderen Blechen der B-Säule (2) größeren Blechstärke und/oder aus einem Blech mit einer im Vergleich zu den anderen Blechen höheren Festigkeit gefertigt ist.

2. Karosserie nach Anspruch 1, **dadurch gekennzeichnet, dass** das bis auf die Höhe des Bodenblechs (8) geführte Verstärkungsblech (4) der B-Säule (2) durch eine Ausnehmung (7) in einen Längsträger (3) eindringt.

3. Karosserie nach Anspruch 1 oder 2, **dadurch gekennzeichnet, dass** die B-Säule (2) sich vor dem Längsträger (3) erweitert und mit einer Erweiterung (18) in den Längsträger (3) eindringt.

4. Karosserie nach zumindest einem der vorhergehenden Ansprüche, **dadurch gekennzeichnet, dass** das Verstärkungsblech (4) der B-Säule (2) die in den Längsträger (3) eindringende Erweiterung (18) aufweist.

5. Karosserie nach zumindest einem der vorhergehenden Ansprüche, **dadurch gekennzeichnet, dass** die Erweiterung (18) über die gesamte Höhe nahezu denselben Querschnitt aufweist.

6. Karosserie nach zumindest einem der vorhergehenden Ansprüche, **dadurch gekennzeichnet, dass** das Verstärkungsblech (4) an seinem von der Bodengruppe (1) wegweisenden Ende an übrigen Blechen der B-Säule (2) befestigt ist.

7. Karosserie nach zumindest einem der vorhergehenden Ansprüche, **dadurch gekennzeichnet, dass** das Verstärkungsblech (4) der B-Säule (2) von einem Außenblech (10) überdeckt ist.

8. Karosserie nach zumindest einem der vorhergehenden Ansprüche, **dadurch gekennzeichnet, dass** ein parallel zu einem Schweller (11) des Längsträgers (3) geführtes zweites Verstärkungsblech (6) zumindest den nahe der Bodengruppe (1) angeordneten Bereich des Verstärkungsblechs (4) der B-Säule (2) überdeckt.

9. Karosserie nach zumindest einem der vorhergehenden Ansprüche, **dadurch gekennzeichnet, dass** das Verstärkungsblech (4) der B-Säule an dem zweiten Verstärkungsblech (6) befestigt ist.

10. Karosserie nach zumindest einem der vorhergehenden Ansprüche, **dadurch gekennzeichnet, dass** ein Bodenquerträger (9) auf die Anbindung der B-Säule (2) an die Bodengruppe (1) zuläuft.

## Claims

1. Body for a motor vehicle with a longitudinal beam (3) laterally limiting an underbody (1), with a floor panel (8) fastened to the lower region of the longitudinal beam (3) and with a B-column (2), which is supported on the underbody (1) and limits a door recess to the rear, wherein the B-column (2) penetrates into the longitudinal beam (3) and a connection of the longitudinal beam (3) with the B-column (2) is arranged on the underside of the longitudinal beam (3) and a reinforcing panel (4) of the B-column (2) arranged on the outside extends to the level of the floor panel (8), **characterised in that** the reinforcing panel (4) of the B-column (2) extending to the level of the floor panel (8) is fabricated with a larger sheet thickness relative to other panels of the B-column (2) and/or is fabricated from a metal sheet with a higher strength compared to the other panels.

2. Body according to claim 1, **characterised in that** the reinforcing panel (4) of the B-column (2) extending to the level of the floor panel (8) penetrates into a longitudinal beam (3) through a recess (7).

3. Body according to claim 1 or 2, **characterised in that** the B-column (2) widens in front of the longitudinal beam (3) and penetrates into the longitudinal beam (3) with a widened portion (18).

4. Body according to at least one of the preceding claims, **characterised in that** the reinforcing panel (4) of the B-column (2) has the widened portion (18) penetrating into the longitudinal beam (3).

5. Body according to at least one of the preceding claims, **characterised in that** the widened portion (18) has approximately the same cross-section over the entire height.

6. Body according to at least one of the preceding claims, **characterised in that** the reinforcing panel (4) is fastened to other panels of the B-column (2) at its end directed away from the underbody (1).

7. Body according to at least one of the preceding claims, **characterised in that** the reinforcing panel (4) of the B-column (2) is covered by an external panel (10).

8. Body according to at least one of the preceding claims, **characterised in that** a second reinforcing panel (6) extending parallel to a sill (11) of the longitudinal beam (3) covers at least the region of the reinforcing panel (4) of the B-column (2) arranged close to the underbody (1).

9. Body according to at least one of the preceding claims, **characterised in that** the reinforcing panel (4) of the B-column is fastened to the second reinforcing panel (6).

10. Body according to at least one of the preceding claims, **characterised in that** a floor crossbeam (9) runs towards the connection of the B-column (2) to the underbody (1).

## Revendications

1. Carrosserie pour un véhicule automobile, avec un longeron (3) délimitant latéralement un soubassement (1), avec une tôle formant plancher (8) fixée contre la partie inférieure du longeron (3) et avec un pied milieu (2), prenant appui sur le soubassement (1) et délimitant vers l'arrière une baie de porte, le pied milieu (2) s'engageant dans le longeron (3) et un assemblage du longeron (3) avec le pied milieu (2) étant agencé sur le côté inférieur du longeron (3), et une tôle de renfort (4) du pied milieu (2), agencée sur la face extérieure et guidée jusqu'à la hauteur de la tôle formant plancher (8), **caractérisée en ce que** la tôle de renfort (4) du pied milieu (2), guidée jusqu'à la hauteur de la tôle formant plancher (8), est réalisée avec une épaisseur de tôle supérieure à celle des autres tôles du pied milieu (2) et/ou dans une tôle avec une résistance supérieure à celle des autres tôles.

2. Carrosserie selon la revendication 1, **caractérisée en ce que** la tôle de renfort (4) du pied milieu (2), guidée jusqu'à la hauteur de la tôle formant plancher (8), s'engage dans le longeron (3) en passant par un évidement (7).

3. Carrosserie selon la revendication 1 ou 2, **caractérisée en ce que** le pied milieu (2) s'élargit devant le longeron (3) et s'engage avec un élargissement (18) dans le longeron (3).

4. Carrosserie selon au moins l'une des revendications précédentes, **caractérisée en ce que** la tôle de renfort (4) du pied milieu (2) comporte l'élargissement (18) s'engageant dans le longeron (3).

5. Carrosserie selon au moins l'une des revendications précédentes, **caractérisée en ce que** l'élargissement (18) comporte à peu près la même section sur toute la hauteur.

6. Carrosserie selon au moins l'une des revendications précédentes, **caractérisée en ce que** la fixation de la tôle de renfort (4) contre les autres tôles du pied milieu (2) est effectuée au niveau de son extrémité opposée au soubassement (1).

7. Carrosserie selon au moins l'une des revendications précédentes, **caractérisée en ce que** la tôle de renfort (4) du pied milieu (2) est recouverte par une tôle extérieure (10).

8. Carrosserie selon au moins l'une des revendications précédentes, **caractérisée en ce qu'**une deuxième tôle de renfort (6), orientée parallèlement à un seuil de porte (11) du longeron (3), recouvre au moins la zone de la tôle de renfort (4) du pied milieu (2), agencée à proximité du soubassement (1).

9. Carrosserie selon au moins l'une des revendications précédentes, **caractérisée en ce que** la tôle de renfort (4) du pied milieu (2) est fixée contre la deuxième tôle de renfort (6).

10. Carrosserie selon au moins l'une des revendications précédentes, **caractérisée en ce qu'**un support transversal de plancher (9) s'avance vers l'assemblage du pied milieu (2) contre le soubassement (1).
